Europäisches Patentamt

(19) European Patent Office    (11) Publication number:    **0 300 642**

Office européen des brevets                            **A1**

(12)    **EUROPEAN PATENT APPLICATION**

(21) Application number: 88306199.6    (51) Int. Cl.⁴: **A01D 34/73**

(22) Date of filing: 07.07.88

(30) Priority: 24.07.87 GB 8717572

(43) Date of publication of application:
25.01.89 Bulletin 89/04

(84) Designated Contracting States:
AT BE CH DE ES FR GB GR IT LI LU NL SE

(71) Applicant: **ELECTROLUX NORTHERN LIMITED**
**Hurworth Road Aycliffe Industrial Estate**
**Newton Aycliffe Co.Durham DL5 6UP(GB)**

(72) Inventor: **Dunn, Kenneth**
**70 Fulthorpe Avenue Mowden Park**
**Darlington County Durham(GB)**

(74) Representative: **Arthur, Bryan Edward et al**
**Withers & Rogers 4 Dyer's Buildings Holborn**
**London EC1N 2JT(GB)**

(54) **Rotary lawn mower.**

(57) A rotary lawn mower comprises a hood having a
grass collection opening, a blade rotatable within the
hood, and a drive unit operatively coupled to the
blade, the blade including two or more arms each
having a leading edge for cutting grass and an
upturned trailing edge portion for generating an up-
draught inside the hood. The radially outer extremity
(22) of each upturned portion (20) is displaced in-
wardly relative to the radially outer extremity (24) of
the trailing edge (18) of the respective arm (10, 12)
so as to form a discontinuity with the said trailing
edge (18).

FIGURE 1A.

EP 0 300 642 A1

## ROTARY LAWN MOWER

This invention relates to a rotary lawn mower and a cutting blade for such a mower.

In a known and wheeled rotary lawn mower having a container for receiving grass cuttings, a rotatable blade is mounted within a protective hood which has an opening allowing communication between the space beneath the hood with the container interior. The blade performs two primary functions. Not only does it cut grass as it rotates, but it also creates an updraught of air in the hood to lift grass-cuttings and other debris and propel them towards the opening for collection in the container. This latter function is achieved by arranging each arm of the blade to have an upturned trailing edge portion at the end thereof.

We have found that the noise created during rotation of the blade in such a mower accounts for a major part of the total noise output of the mower during operation, and it is an object of this invention to provide a blade which produces less noise without appreciably affecting the performance of the blade in terms of its cutting and grass collection properties.

According to one aspect of this invention a rotary lawn mower comprises a hood having a grass collection opening, a blade rotatable within the hood, and a drive unit operatively coupled to the blade, the blade including two or more arms each having a leading edge for cutting grass and an upturned trailing edge portion for generating an updraught inside the hood, characterised in that the radially outer extremity of each upturned portion is displaced inwardly relative to the radially outer extremity of the trailing edge of the respective arm so as to form a discontinuity with the said trailing edge.

During forward movement of the mower and whilst the blade is rotating, grass is cut not by the total radial extent of the leading and cutting edge of the blade, but by a relatively restricted or reduced portion of the leading edge in the region of the outermost extremity. For example, during forward movement of the mower and in the case of a two armed blade of diameter 40-42 cm the actual effective length of the cutting edge is in the region of 2-3 cms of the radial outermost part of the cutting edge of each arm. Naturally, when a mower is stationary, the radial extent of the effective cutting edge is somewhat greater than 2-3 cms in that it approaches coincidence with the total radial extent of the cutting edge. Considered slightly differently, when the mower is stationary the blade will ascribe and cut an annulus having inner and outer radii corresponding to the inner and outer radii of the cutting edge.

Most cut grass and lawn debris naturally passes over the upper surface of each blade arm and is either sucked into the container or deposited back on to the law as a mulch. In practice, a certain quantity of cuttings is neither sucked into the container nor mulched but, generally speaking the greatest proportion of grass cuttings are not only produced by the relatively restricted radially outer extremity of the leading cutting edge but also pass over the outer extremity of the blade into the collector. It is, therefore, a further object of the present invention to reduce the degree of obstruction to passage of grass cuttings into the collector previously created by the upstanding trailing edge portion of the blade. To this end the radially outer extremity of the upturned portion of the trailing edge is disposed up to 50% radially inwardly or 50% radially outwardly of the radially innermost extremity of the actual cutting edge of the blade. In one form of blade according to the present invention, it will, therefore, be appreciated that the discontinuity between the radially outer extremity of each upturned portion, and the trailing edge of the respective arm is disposed up to 50% radially inwardly or 50% radially outwardly of the radially innermost extremity of the actual cutting edge of the blade. In the blades of the prior art mower the upturned portion extends to the extremity of the trailing edge of the blade arm, and no discontinuity exists there between. It is considered although the present invention is not limited by this consideration that the noise produced by the blade is, to a significant degree, a result of turbulence generated by the proximity of the radial extremity of the upturned trailing edge portion to the hood and, more especially, to the proximity thereof to the boundaries of, for example, the sides of the grass collection opening. By arranging for the outer edge of the upturned portion to be spaced to a greater extend from the hood the noise output can be considerably reduced.

Preferably, the distance between the radially outer extremity of the upturned portion and the radially outer extremity of the respective blade arm falls within the range of 6mm to 40mm, with a total radial extent of the upturned portion falling within the range of 15mm to 100mm. In a cross-section transverse to its length the upturned portion is preferably inclined upwardly at an angle in the range of from 30° to 90° to a plane perpendicular to the axis of rotation.

Having reduced the maximum radial extent of the upturned portion in the manner described above, improved noise performance may be obtained by forming that portion of the blade beyond the upturned portion with an aerofoil section or with a tapered or downwardly curved trailing edge section. This tends to reduce further the drag and turbulence at the blade ends.

The upturned portion of each blade arm may also be shaped to form a backwardly leaning vane in the sense that, viewed along a line of sight parallel to the axis of rotation of the blade, the upturned portion, at least in a part thereof, is inclined away from a radius directed lengthwise of the blade with its outer edge trailing the inner edge. The inclination from the radius may be constant over the whole width of the upturned portion. Alternatively, only a part of the upturned portion may be so inclined, or the inclination may increase progressively with radial distance from the axis of rotation. This feature of a backward leaning upturned portion may, in accordance with another aspect of the invention, be used independently of the feature recited in the preceding paragraphs to effect some noise reduction. Preferably, the maximum angle of inclination with respect to the radius is 45 or less in a horizontal cross section, i.e. a cross section perpendicular to the axis of rotation.

A benefit of a mower in accordance with the invention in addition to its reduced noise output, is the possibility of improved efficiency. It has been found that a mower with the preferred blade form requires substantially less power to rotate the blade at a given speed and to generate a given upward airflow, when compared with the prior art mower.

The invention includes, according to a further aspect thereof, a blade for a rotary lawn mower comprising at least two arms extending generally radially from a central rotation axis and each having a leading edge portion for cutting grass and a trailing edge portion upturned with respect to the major part of the arm for generating an updraught of air when in use, wherein the maximum radial extent of the upturned portion is less than maximum radial extent of the respective arm.

Embodiments of blades for a mower in accordance with the invention are illustrated by way of example only in the drawings in which:-

Figures 1A, 1B and 1C are, respectively, perspective, front plan views of a first blade;

Figures 2 and 3 are end views of first and second variations on the blade of Figures 1A to 1C;

Figures 4A, 4B, and 4C are front, plan, and end views respectively of a second blade;

Figure 4D is a view of the second blade in the direction of the arrow 'A' in Figure 4C;

Figure 5A, 5B and 5C are front, plan and end views respectively of a third blade; and

Figure 5D is a view of the third blade in the direction of the arrow 'A' in Figure 5C.

Each blade shown in the drawings has two arms 10, 12 extending radially from an axis of rotation 14, each arm having a leading cutting edge 16 and a trailing edge 18. An outer portion 10A or 12A of each arm is inclined downwardly in the direction of rotation R with respect to the inner portions of the blade so that the outer parts of the cutting edges extend below the leading edges of the inner portions. In accordance with the invention, each blade arm has an upturned trailing edge portion 20 having an outer edge 22 located radially inwardly with respect to the outer extremity 24 of the arm by a distance 'X'.

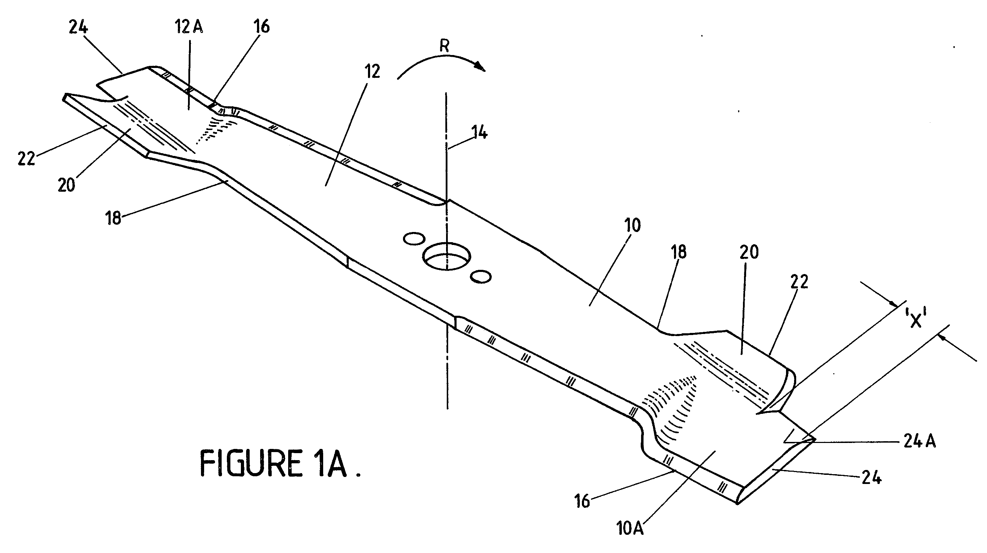

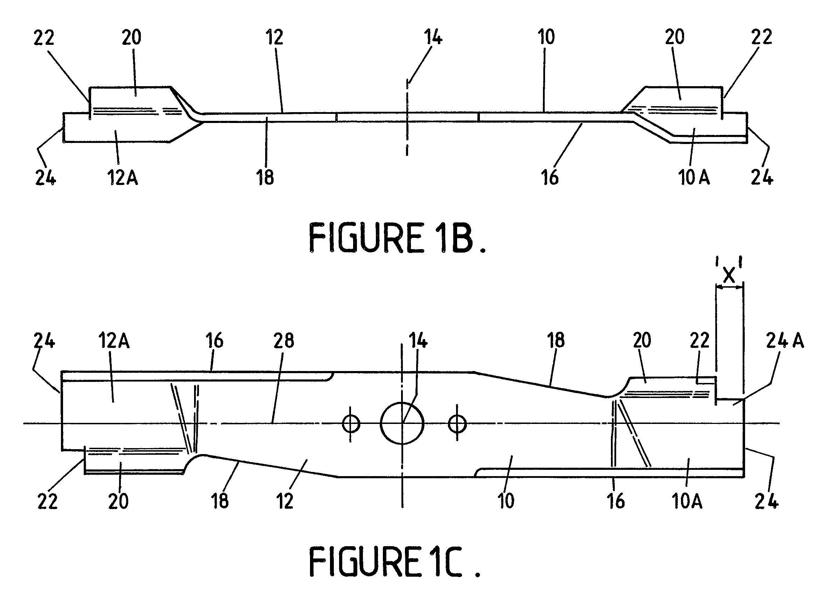

In the blade shown in Figure 1C the upturned portions 20 are generally parallel, when viewed in a horizontal section, to a centre line or radii 28 directed lengthwise of the blade. The outer extremity 24 of each blade arm has a cross section generally in the form of an aerofoil, the trailing edge portion 24A being tapered to reduce drag.

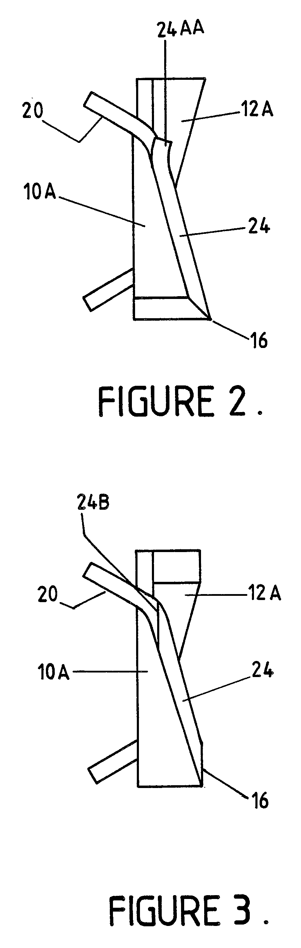

Variations in the shape of the extremity 24 are illustrated in Figures 2 and 3. In Figure 2, the outer extremity, instead of being formed with a tapering trailing edge portion, has a trailing edge portion 24AA which is bent downwards with simple cut-off edge. In Figure 3, the cutting edge 16 is formed by grinding the underside of each blade arm in a plane parallel to the plane of the inner portions of the blade, whilst the trailing edge portion 24B is similarly formed by grinding the upper face of the extremity 24 in a parallel plane to that of the cutting edge 16.

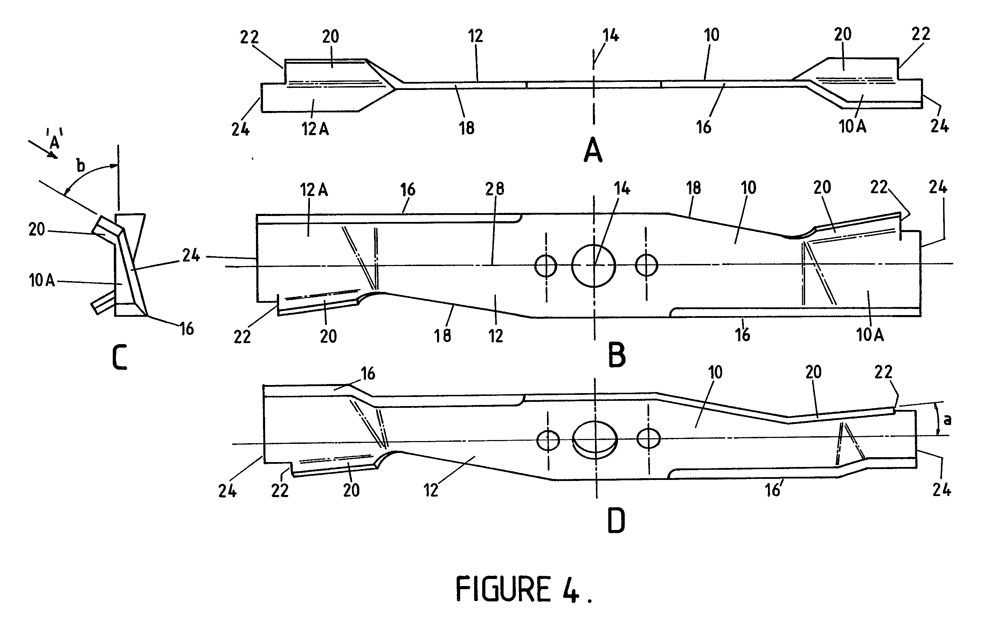

The blade of Figures 4A to 4D has backward leaning upturned portions 20 angled with respect to the radii 28 directed longitudinally of the blade. In this case, the angle is constant with respect to the radii over the whole width of each upturned portion 20. The upward inclination of the upturned portions 20 is approximately 60° with respect to the horizontal, i.e. with respect to the inner portions of the blade, as shown in Figure 4C.

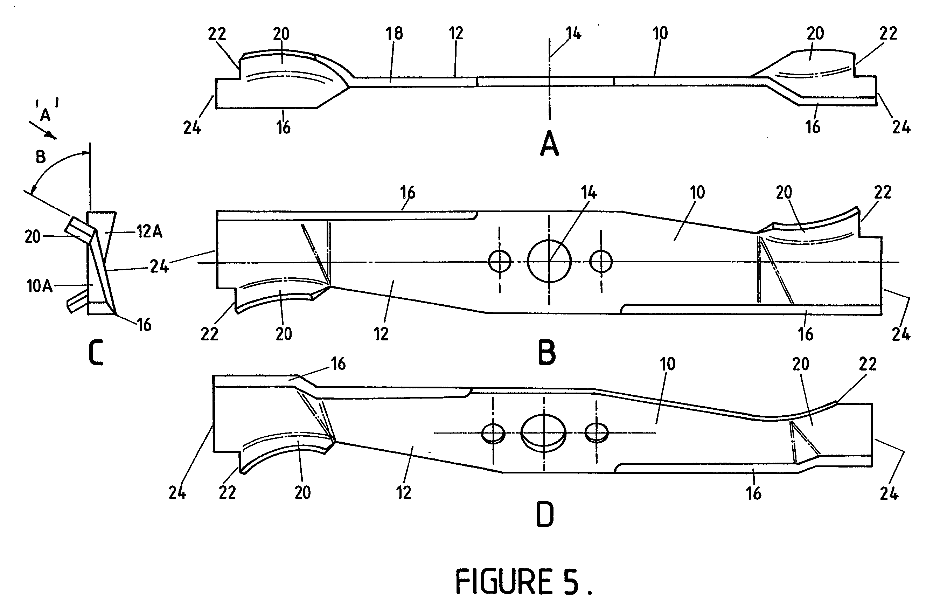

An alternative embodiment of blade with backward leaning upturned portions 20 is shown in Figures 5A to 5D. The degree of backward leaning increases as the distance from the axis 14 increases, the portions 20 presenting a convexly curved face in the direction of blade rotation.

The extremity 24 of each blade may, when viewed in plan, be "backed-off" in that the radially outer extremity of each arm is tapered so as to produce relative to the hood a greater clearance at the trailing edge than at the leading edge of each blade.

## Claims

1. A rotary lawn mower comprising a hood having a grass collection opening, a blade rotatable within the hood, and a drive unit operatively coupled to the blade, the blade including two or more arms each having a leading edge for cutting grass and an upturned trailing edge portion for generating an updraught inside the hood, characterised in that the radially outer extremity of each upturned portion is displaced inwardly relative to the radially outer extremity of the trailing edge of the respective arm so as to form a discontinuity with the said trailing edge.

2. A rotary lawn mower according to claim 1 characterised in that the radially outer extremity of the upturned portion of the trailing edge is disposed up to 50% radially inwardly or 50% radially outwardly of the radially innermost extremity of the actual cutting edge of the blade.

3. A rotary lawn mower according to claim 1 or claim 2 wherein the distance between the radially outer extremity of the upturned portion and the radially outer extremity of the respective blade arm falls within the range of 6mm to 40mm, with a total radial extent of the upturned portion falling within the range of 15mm to 100mm.

4. A rotary lawn mower according to any preceding claim characterised in that the upturned portion, when considered in cross-section transverse to its length, is inclined upwardly at an angle in the range of from 30° to 90° to a plane perpendicular to the axis of rotation.

5. A rotary lawn mower according to any one of claims 1 to 4 characterised in that the blade portion disposed radially outwardly of the upturned portion is formed with a tapered or downwardly curved trailing edge.

6. A rotary lawn mower according to any preceding claim characterised in that, when viewed in plan, the radially outer extremity of each arm is tapered to produce relative to the hood a greater clearance at the trailing edge than at the leading edge of each blade.

7. A blade for a rotary lawn mower comprising at least two arms extending generally radially from a central rotation axis and each having a leading edge portion for cutting grass and a trailing edge portion upturned with respect to the major part of the arm for generating an updraught of air when in use, wherein the maximum radial extent of the upturned portion is less than maximum radial extent of the respective arm.

8. A blade according to claim 7 wherein the maximum radial extent of the upturned portion is less than maximum radial extent of the respective arm and is determined by a discontinuity in the said trailing edge.

9. A blade according to claim 7 wherein the radially outer extremity of the upturned portion of the trailing edge is disposed up to 50% radially inwardly or 50% radially outwardly of the radially innermost extremity of the actual cutting edge of the blade.

10. A blade according to claim 7 wherein the distance between the radially outer extremity of the upturned portion and the radially outer extremity of the respective blade arm falls within the range of 6mm to 40mm, with a total radial extent of the upturned portion falling within the range of 15mm to 100mm.

11. A blade according to claim 7 wherein the upturned portion, when considered in cross-section transverse to its length, is inclined upwardly at an angle in the range of from 30° to 90° to a plane perpendicular to the axis of rotation.

12. A blade according to claim 7 wherein, when viewed in plan, the radially outer extremity of each arm is tapered to produce relative to the hood a greater clearance at the trailing edge than at the leading edge of each blade.

FIGURE 1A.

FIGURE 1B.

FIGURE 1C.

FIGURE 2.

FIGURE 3.

FIGURE 4.

EP 0 300 642 A1

FIGURE 5.

EP 0 300 642 A1

## DOCUMENTS CONSIDERED TO BE RELEVANT

EP 88306199.6

| Category | Citation of document with indication, where appropriate, of relevant passages | Relevant to claim | CLASSIFICATION OF THE APPLICATION (Int. Cl.4) |
|---|---|---|---|
| X | US - A - 4 254 607 (MOORE)  * Fig. 2,3 * | 1,3,4,7, 8,10,11 | A 01 D 34/73 |
| X | DE - A1 - 2 921 249 (GÖBLER HANS)  * Fig. 1 * | 1,2,3,4, 7,9,11 | |
| A | US - A - 4 471 603 (VELTIN, JR)  * Fig. 1 * | 1,3,4,7, 8,10,11 | |
| A | US - A - 4 628 672 (JONES)  * Fig. 1-7 * | 1,3,4,7, 8,10,11 | |
| A | US - A - 3 563 015 (C.C. RENFROE)  * Column 2, lines 40 ff; fig. 1 * | 1,3,7,8, 10,11 | |

TECHNICAL FIELDS SEARCHED (Int. Cl.4)

A 01 D 34/00

A 01 D 35/00

A 01 D 53/00

A 01 D 55/00

The present search report has been drawn up for all claims

| Place of search | Date of completion of the search | Examiner |
|---|---|---|
| VIENNA | 05-10-1988 | SCHNEEMANN |